# EUROPEAN PATENT SPECIFICATION

(11) **EP 1 918 205 B1**
(45) Date of publication and mention of the grant of the patent: **05.05.2010**
(21) Application number: 07000061.7
(22) Date of filing: 03.01.2007
(51) Int. Cl.: B65B 5/10, B65B 61/02, B41J 3/01, G06K 1/12

(54) **Packaging sheet printing method of automatic medicine packaging machine**
Verpackungsfolienbedrückverfahren einer automatischen Medizinverpackungsmaschine
Procédé d'impression de feuilles d'emballage à l'aide d'une machine d'emballage médicale automatique

(30) Priority: 01.11.2006 KR 20060107413
(43) Date of publication of application: 07.05.2008
(73) Proprietor: JVM Co., Ltd., Daegu 704-170 (KR)
(72) Inventor: Kim, Jun-ho, Dalseo-gu Daegu, 704-730 (KR)
(74) Representative: Grünecker, Kinkeldey, Stockmair & Schwanhäusser Anwaltssozietät

(56) References cited:
- US-A- 5 827 180
- US-A1- 2001 001 358
- US-A1- 2002 198 624
- US-B1- 6 776 341

## Description

### BACKGROUND OF THE INVENTION

### Field of the Invention

The present invention relates to a packaging sheet printing method of an automatic medicine packaging machine in which a one-dimensional barcode is supplemented, restricted expression of information due to the one-dimensional barcode is prevented, and various and plenty of information can be easily printed on a packaging sheet.

### Description of the Related Art

Generally, an automatic medicine packaging machine automatically packages medicine such as tablets dispensed by doses continuously.

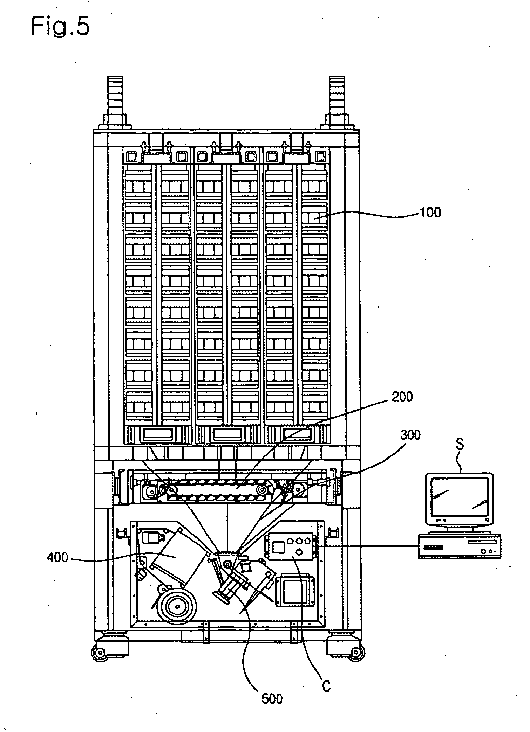

A conventional automatic medicine packaging machine is schematically illustrated in FIG. 5 and its configuration and operation will be described as follows.

As illustrated, the conventional automatic medicine packaging machine includes a plurality of tablet cassettes 100 provided on shelves that are disposed at the upper side of the machine, a tablet discharging device 200 installed at the lower side, a hopper 300 provided at the lower sides of the tablet cassettes 100 and the tablet discharging device 200, and a sealing device 500 to feed a packaging sheet printed by a printer 400 to seal the packaging sheet.

The printer 400 is controlled by a controller C installed in the automatic medicine packaging machine, and the controller C controls the printer 400 to print outer surfaces of the packaging sheet according to printing information inputted from a server computer S installed out of the automatic medicine packaging machine.

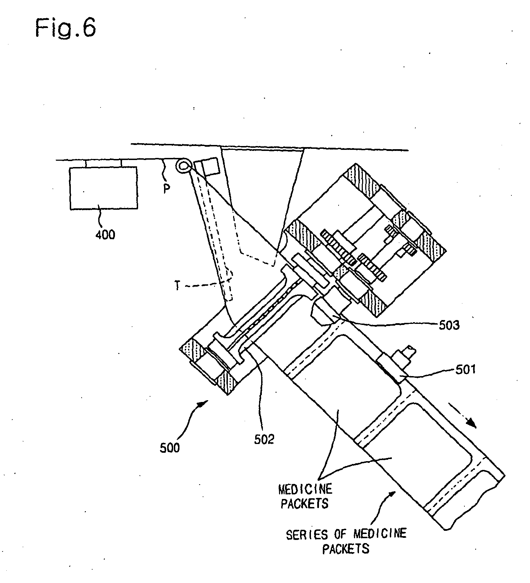

As illustrated in FIG. 6, the packaging sheet P printed by the printer 400 is doubled over due to a triangular plate T and fed downwardly by packaging sheet feeding roller 501 to be welded at the lateral sides and the longitudinal side thereof by a lateral side welding roller 502 and a longitudinal side welding roller 503 so that a series of machine packets, in which a plurality of medicine packets is formed in series, is formed.

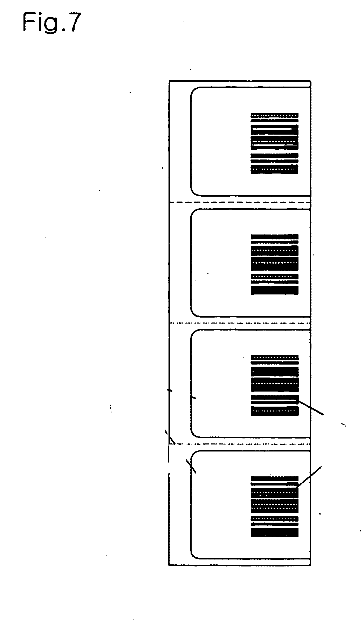

As illustrated in FIG. 7, a plurality of medicine packets welded in the width direction and in the longitudinal direction by doses continues to form a series of medicine packets as described above, and in this state, the one-dimensional barcodes are printed on the front sides of the respective medicine packets by the printer 400.

The one-dimensional barcode is used for a worker to read the information about the medicine packet with a barcode reader.

However, the conventional printing method has the following disadvantages.

Although the one-dimensional barcode is printed on the front sides of the medicine packets as described above, due to the restriction of the one-dimensional barcode, a variety of information about the medicine packets cannot be expressed sufficiently.

Moreover, the one-dimensional barcode is frequently printed on wrong places of the front sides of the medicine packets or printed badly.

Moreover, a header packet and a footer packet of a series of medicine packets cannot be classified by patients so that it is difficult to handle and manage the series of medicine packets according to the patients.

US Patent No. US 2001/0001358 A1 discloses a drug filling machine wherein individual vials are filled with drugs and then labelled in a labeller, wherein label sheets are stuck on the vial by being pressed with a sponge roller. Furthermore, the individual vials are received in an envelope, which size is selected according to the amount of vials received therein. Information on the respective drug comprised in each vial and information on the patient is printed on the envelope before the vials are received in the envelope.

US Patent No. US 5,827,180 discloses cartridges in a pharmaceutical dispensing and tracking system, which are encoded by using one- or two-dimensional bar codes or magnetic records.

In US Patent Application US 2002/0198624 A1 bar codes are provided on labels which are placed on cups of a hospital drug distribution system.

US Patent US 6,776,341 B1 discloses the application of a bar code directly on a pill or on a label which is provided on a pill.

### SUMMARY OF THE INVENTION

Therefore, the present invention has been made in view of the above and/or other problems, and it is the object of the present invention to provide a packaging sheet printing method for an automatic medicine packaging machine in which function of a one-dimensional barcode is complemented, information is prevented from being restricted due to the one-dimensional barcode, and a great deal of and a variety of information are easily printed on a packaging sheet, according to claim 1.

The present invention further provides a packaging sheet printing method for an automatic medicine packaging machine in which a position and a size of a barcode can be easily adjusted by a user's intent so that a printing position of the barcode can be easily prevented from being wrong and/or bad.

The present invention further provides a packaging sheet printing method for an automatic medicine packaging machine in which a printing position and a text size are selected and the printing result can be confirm with the naked eye such that an error and inferiority of a printing position is easily checked with the naked eye to prevent the printing error.

The present invention further provides a packaging sheet printing method for an automatic medicine packaging machine in which a series of medicine packets are exactly classified by patients and the information and notabilia about medicines for the patients can be easily understood.

In accordance with the present invention, the object can be accomplished by the provision of a packaging sheet printing method for an automatic medicine packaging machine comprising: estimating a quantity of data to be printed on a front side of a packaging sheet of a medicine packet, in which a medicine is packaged by a dose, according to respective patients; comparing the estimated quantity of data to be printed with a reference quantity of data to determine whether the estimated quantity of data exceeds the reference quantity of data or not; selecting a one-dimensional barcode as a printing method when the estimated quantity of data is equal to or less than the reference quantity of data, and a two-dimensional barcode as a printing method when the estimated quantity of data exceeds the reference quantity of data; selecting a size and a position of the barcode to be printed according to a predetermined size of the medicine packet for a dose; selecting an item of data to be additionally printed on the front side of the medicine packet other than the barcode and assigning text size and position of data corresponding to the selected item; and printing the selected barcode and predetermined printing data on the front side of the packaging sheet of the medicine packet.

The packaging sheet printing method further comprises virtually displaying the barcode and the additional printing data item, selected according to the patient, in a medicine packet area of a display such that sizes and positions of the selected barcode and additional printing data item can be inspected with a naked eye, carried out after selecting the additional printing item.

The packaging sheet printing method further comprises adjusting the sizes and positions of the barcode and the additional printing item to settle an error when the error is found from the displayed barcode and additional printing item, carried out after virtually displaying the barcode.

The packaging sheet printing method further comprises printing information about the respective patients, the number of the medicine packets, and information of medicines packaged into the packets on a header packet positioned at a leading side of a series of medicine packets before printing the data on the front side of the medicine packets according to the respective patients, carried out before estimating the quantity of data to be printed.

The packaging sheet printing method further comprises searching a warning message about the medicine packaged into the header packet, and printing the warning message on the header packet when the warning message is searched, carried out after printing the header packet.

Moreover, the packaging sheet printing method further comprises printing the information about the respective patients, the number of the medicine packets, and information of medicines packaged into the packets on a footer packet positioned at an ending side of a series of medicine packets after printing the front side of the medicine packets according to the respective patients, carried out after printing the data.

### BRIEF DESCRIPTION OF THE DRAWINGS

These and/or other objects and advantages of the present invention will become apparent and more readily appreciated from the following description of the embodiments, taken in conjunction with the accompanying drawings, in which:
FIG. 1 is a flowchart illustrating a packaging sheet printing method for an automatic medicine packaging machine according to an embodiment of the present invention;
FIG. 2 is a plan view illustrating a series of medicine packets printed by performing the packaging sheet printing method for an automatic medicine packaging machine according to the embodiment of the present invention;
FIG. 3 is a photograph illustrating a virtual displaying stepof the packaging sheet printing method for an automatic medicine packaging machine according to the embodiment of the present invention;
FIG. 4 is a photograph illustrating a setting state of a header packet of the packaging sheet printing method for an automatic medicine packaging machine according to the embodiment of the present invention;
FIG. 5 is a front view illustrating a conventional automatic medicine packaging machine;
FIG. 6 is an enlarged front view of a main part illustrating operation of a printer of the conventional automatic medicine packaging machine of FIG. 5; and
FIG. 7 is a plan view illustrating a series of medicine packets printed in a conventional packaging sheet printing method.

### DESCRIPTION OF THE PREFERRED EMBODIMENTS

Hereinafter, a packaging sheet printing method for an automatic medicine packaging machine according to embodiments of the present invention will be described in detail with reference to the accompanying drawings.

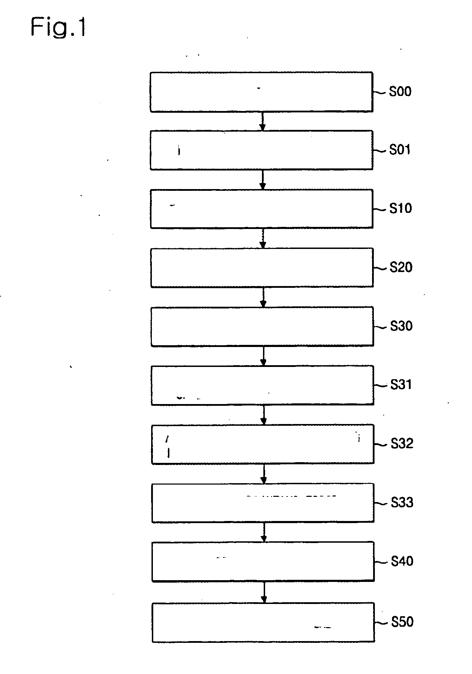

FIG. 1 is a flowchart illustrating a packaging sheet printing method for an automatic medicine packaging machine according an embodiment of the present invention.

As illustrated, the packaging sheet printing method includes a data quantity estimating operation (S10) of estimating the quantity of data to be printed on the front side of a medicine packet, an excessive data analyzing operation (S20) of comparing and analyzing whether the estimated quantity of data exceeds a reference quantity of data, a printing method selecting operation (S30) of selecting a printing method of a barcode according to the analysis, and a data printing operation (S40) of printing the selected barcode on the front side of the medicine packet.

In the data quantity estimating operation (S10), the quantity of data to be printed on the front side of the medicine packet packaged by a dose is estimated according to patients. The quantity of data to be printed is generally estimated based on the amount of text to be printed on the front side of the medicine packet.

In the excessive data analyzing operation (S20), the estimated quantity of data to be printed is compared with a preset reference quantity of data to analyze whether the estimated quantity of data to be printed exceeds the reference quantity of data or not.

The reference quantity of data means the quantity of data printed with the one-dimensional barcode, that is, the amount of text. When the reference quantity of data is compared with the estimated quantity of data and the estimated quantity of data exceeds the reference quantity of data, the data may be printed with a two-dimensional barcode.

In the printing method selecting operation (S30), when the estimated quantity of data to be printed is less than the reference quantity of data as a result of the analysis, the printing method using the one-dimensional barcode is selected. When the estimated quantity of data to be printed exceeds the reference quantity of data, the printing method using the two-dimensional barcode is selected.

In the data printing operation (S40), the selected barcode and the data to be printed are printed on the front side of the medicine packet.

As such, when the quantity of data to be printed on the front side of the medicine packet according to the patients exceeds the reference quantity of data, the data to be printed is printed with the two-dimensional barcode so that the limit to the quantity of information of the one-dimensional barcode is easily overcome and a variety and a great deal of information are easily expressed.

The packaging sheet printing method according to the present invention further includes a barcode size and position selecting operation (S31) of selecting the size and position of the barcode to be printed corresponding to a predetermined size of a medicine packet for a dose, performed after the printing method selecting operation (S30).

In this operation, the size and position of the barcode to be printed on the front side of the medicine packet are selected in advance according to the side of the medicine packet for a dose, the one-dimensional barcode as well as a more complicated one such as the two-dimensional barcode can be easily printed while preventing an error in the printing position and inferiority.

The packaging sheet printing method further includes an additional printing item assigning operation (S32), performed after the barcode size and position selecting operation (S31), of selecting an item of data to be additionally printed on the front side of the medicine packet other than the barcode, and of assigning the text size and position of the data to be printed corresponding to the selected item. '

In this operation, data to be printed other than the barcode, for example, patient name, hospital name, patient serial number, medicine name, a medical department name, days of taking the medicine, and the like are selected by a user and the text size and position of the data are assigned. The additional items are assigned and printed so that information of the medicine packet can be expressed more richly.

The packaging sheet printing method according to the present invention further includes a virtually displaying operation (S33), performed after the additional printing item assigning operation (S32), of virtually displaying the barcode and the additional printing item, which are selected according to the patient such that the size and position of the barcode and the additional printing item, are within a medicine packet area of a display.

In this operation, the selected barcode and the additional printing item are virtually displayed on the display, namely, on a monitor of the server computer such that whether the printing positions and sizes of the barcode and the additional printing item are exactly selected can be inspected with naked eyes.

The packaging sheet printing method according to the present invention further includes a printing error settling operation (S34), performed after the virtually displaying operation (S33), of settling an error by adjusting the sizes and positions of the barcode and the additional printing item when a displaying error is found from the barcode and the additional printing item.

In this operation, the error of the sizes and positions, found by the visual inspection, are corrected and the corrected sizes and positions are applied to the printing to settle the error found by the visual inspection so that the barcode and the additional printing item can be more precisely printed.

The packaging sheet printing method according to the present invention further includes a header packet printing operation (S00), performed prior to the data quantity estimating operation (S10), of printing patient information, the number of the medicine packets, and information of the medicine packaged in the medicine packets on a header packet of a series of the medicine packets of the patient before printing the data to be printed on the front sides of the medicine packets of the patient.

In this operation, the patient information and the medicine information are printed on the front side of the header packet of the series of the medicine packets so that plural series of the medicine packets can be easily distinguished according to the patients and the series of the medicine packets can be easily handled and managed.

The packaging sheet printing method according to the present invention further includes a warning message printing operation (S01), performed after the header packet printing operation (S00), of searching whether there is a warning message for the medicine, printed on the header packet, and of printing the warning message on the header packet when the warning message is searched.

In this operation, the warning message for the medicine on the header packet according to the patient so that the medicine information, usage, warning, and the like, provided to the patient, can be easily perceived.

The packaging sheet printing method according to the present invention further includes a footer packet printing operation (S50), performed after the data printing operation (S40), of printing the patient information, the number of the medicine packets, and the information about the medicine packaged in the medicine packets on a footer packet, namely, an ending packet of the series of the medicine packets, after finishing the printing of the front sides of the medicine packets.

In this operation, like the case of printing the header packet, the patient information and the information about the medicine packets are printed so that the plural series of the medicine packets are easily distinguished according to the respective patients and the plural series of the medicine packets are easily handled and managed according to the patients.

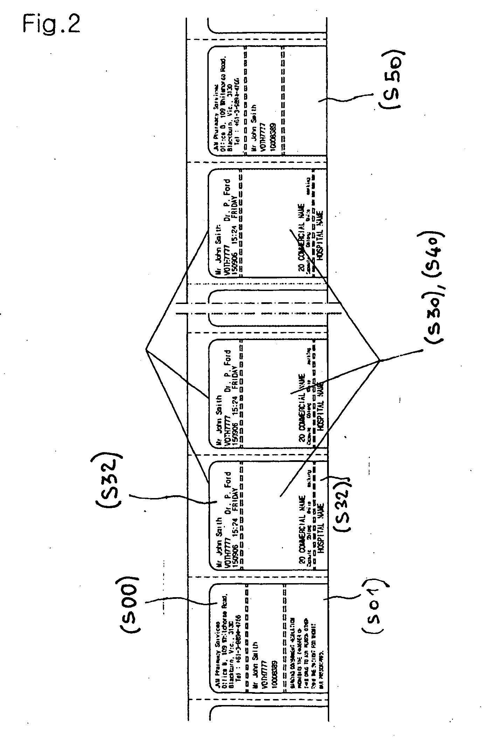

FIG. 2 is a plan view illustrating the series of medicine packets printed by performing the packaging sheet printing method for an automatic medicine packaging machine according to the embodiment of the present invention.

As illustrated, a plurality of the medicine packets, which respectively accommodate the medicine by a dose and are connected to each other in series, to form the series of the medicine packets distinguished according to the patients, and the header packet and the footer packet without accommodating the medicine are formed at the leading side and the ending side of the series of the medicine packets.

The two-dimensional barcodes are printed on the front sides of the header packet and the footer packet and the additional printing items such as the patient name, the hospital name, the patient serial number, and the like are printed more upper and lower than the two-dimensional barcodes.

On the header packet, the patient information and the information of the packaged medicine are printed, and the warning message for the medicine is printed at the lower side of the header packet. On the footer packet, like the header packet, the patient information and the information of the packaged medicine are printed.

The header packet and the footer packet are provided at the leading side and the ending side of the series of the medicine packets in which the plural medicine packets accommodating the medicine for the patient, are connected to each other in series, so that the series of the medicine packets can be easily distinguished according to the patient and easily handled and managed.

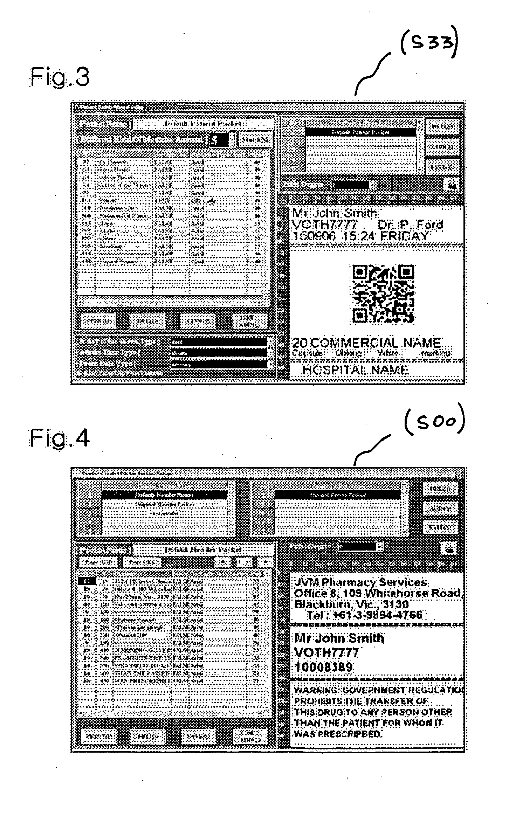

FIG. 3 is a photograph illustrating a virtual displaying step of the packaging sheet printing method for an automatic medicine packaging machine according to the embodiment of the present invention.

As illustrated, the barcode and the additional printing item, selected by the worker, are virtually displayed on the monitor of the server computer so that the worker can easily inspect with naked eyes whether the sizes and positions of the barcode and the additional printing item are exactly selected.

The error found by the visual inspection is easily settled by changing the positions and sizes of the barcode and the additional printing item, displayed on the monitor, by the worker.

FIG. 4 is a photograph illustrating a setting state of a header packet of the packaging sheet printing method for an automatic medicine packaging machine according to the embodiment of the present invention.

As illustrated, the setting of the printing contents on the header packet is directly set by the user while seeing the printing contents displayed on the monitor of the server computer, and this setting is applied to the footer packet.

Additionally, the sizes and positions of the printing contents on the header packet and the footer packet can be also set when setting the printing contents.

As described above, according to the present invention, the function of the one-dimensional barcode is easily complemented, the expression limit of information due to the one-dimensional barcode is easily prevented, and a variety of information can be easily printed on the medicine packets.

Moreover, the position and size of the barcode are easily selected by a user, the error and inferiority of the printing position are prevented, and the medicine packets are printed easily and exactly.

The printing position and the text size are assigned and can be inspected with naked eyes so that the error and inferiority of the printing position can be easily inspected with naked eyes, the inferiority of the printing is prevented, the precision of the printing is improved, and any errors of the printing can be settled.

Advantageously, the series of the medicine packets are easily distinguished by the patients, are easily handled and managed according to the patients, and the information and notabilia about the medicines prescribed to the patients can be easily perceived.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A packaging sheet printing method for an automatic medicine packaging machine-comprising:
estimating a quantity of data to be printed on a front side of a packaging sheet of a medicine packet, in which a medicine is packaged by a dose, according to respective patients (S10);
comparing the estimated quantity of data to be printed with a reference quantity of data to determine whether the estimated quantity of data exceeds the reference quantity of data or not (S20);
selecting a one-dimensional barcode as a printing method when the estimated quantity of data is equal to or less than the reference quantity of data, and a two-dimensional barcode as a printing method when the estimated quantity of data exceeds the reference quantity of data (S30);
selecting a size and a position of the barcode to be printed according to a predetermined size of the medicine packet for a dose (S31);
selecting an item of data to be additionally printed on the front side of the medicine packet other than the barcode and assigning text size and position of data corresponding to the selected item; and
printing the selected barcode and predetermined printing data on the front side of the packaging sheet of the medicine packet (S40).

2. The packaging sheet printing method for an automatic medicine packaging machine according to claim 1, further comprising virtually displaying the barcode and the additional printing data item (S33), selected according to the patient, in a medicine packet area of a display such that sizes and positions of the selected barcode and additional printing data item can be inspected with a naked eye, carried out after selecting the additional printing item (S32).

3. The packaging sheet printing method for an automatic medicine packaging machine according to claim 2, further comprising adjusting the sizes and positions of the barcode and the additional printing item to settle an error when the error is found from the displayed barcode and additional printing item, carried out after virtually displaying the barcode (S34).

4. The packaging sheet printing method for an automatic medicine packaging machine according to claim 1, further comprising printing information about the respective patients, the number of the medicine packets, and information of medicines packaged into the packets on a header packet positioned at a leading side of a series of medicine packets before printing the data on the front side of the medicine packets according to the respective patients, carried out before estimating the quantity of data to be printed (S00).

5. The packaging sheet printing method for an automatic medicine packaging machine according to claim 4, further comprising searching a warning message about the medicine packaged into the header packet, and printing the warning message (S01) on the header packet when the warning message is searched, carried out after printing the header packet (S00).

6. The packaging sheet printing method for an automatic medicine packaging machine according to claim 1, further comprising printing the information about the respective patients, the number of the medicine packets, and information of medicines packaged into the packets on a footer packet positioned at an ending side of a series of medicine packets (S50) after printing the front side of the medicine packets according to the respective patients, carried out after printing the data (S40).

## Patentansprüche

1. Verfahren zum Bedrucken von Verpackungsfolie für eine automatische Medikamenten-Verpackungsmaschine, das umfasst:
Schätzen einer Menge an Daten, die auf eine Vorderseite einer Verpackungsfolie einer Medikamentenpackung aufgedruckt werden soll, in der ein Medikament in einer Dosis entsprechend jeweiliger Patienten verpackt wird (S10);
Vergleichen der aufzudruckenden Menge an Daten mit einer Bezugsnahme an Daten, um festzustellen, ob die geschätzte Menge an Daten die Bezugsmenge an Daten übersteigt oder nicht (S20);
Auswählen eines eindimensionalen Strichcodes als ein Druckverfahren, wenn die geschätzte Menge an Daten genauso groß ist wie oder kleiner als die Bezugsmenge an Daten, und eines zweidimensionalen Strichcodes als ein Druckverfahren, wenn die geschätzte Menge an Daten die Bezugsmenge an Daten übersteigt (S30);
Auswählen einer Größe und einer Position des aufzudruckenden Strichcodes entsprechend einer vorgegebenen Größe der Medikamentenpackung für eine Dosis (S31);
Auswählen eines Datenelementes, das außer dem Strichcode zusätzlich auf die Vorderseite der Medikamentenpackung gedruckt werden soll, und Zuweisen von Textgröße und Position von Daten entsprechend dem ausgewählten Element (S32); und
Aufdrucken des ausgewählten Strichcodes und vorgegebener Druckdaten auf die Vorderseite der Verpackungsfolie der Medikamentenpackung (S40).

2. Verfahren zum Bedrucken von Verpackungsfolie für eine automatische Medikamenten-Verpackungsmaschine nach Anspruch 1, das des Weiteren umfasst, dass der Strichcode und das zusätzliche Druckdatenelement, die entsprechend dem Patienten ausgewählt werden, in einem Medikamenten-Verpackungsbereich einer Anzeigeeinrichtung virtuell so angezeigt werden (S33), dass Größen und Positionen des ausgewählten Strichcodes und des zusätzlichen Druckdatenelementes mit bloßem Auge geprüft werden können, wobei dies nach dem Auswählen des zusätzlichen Druckdatenelementes (S32) ausgeführt wird.

3. Verfahren zum Bedrucken von Verpackungsfolie für eine automatische Medikamenten-Verpackungsmaschine nach Anspruch 2, das des Weiteren umfasst, dass die Größen und Positionen des Strichcodes und des zusätzlichen Druckelementes so angepasst werden (S34), dass ein Fehler behoben wird, wenn der Fehler anhand des angezeigten Barcodes und des zusätzlichen Druckelementes ermittelt wird, wobei dies nach dem virtuellen Anzeigen des Strichcodes ausgeführt wird.

4. Verfahren zum Bedrucken von Verpackungsfolie für eine automatische Medikamenten-Verpackungsmaschine nach Anspruch 1, das des Weiteren umfasst, dass Informationen über die jeweiligen Patienten, die Anzahl von Medikamentenpackungen sowie Informationen über Medikamente, die in den Verpackungen verpackt werden, auf eine erste Packung aufgedruckt werden (S00), die sich an einem Anfang einer Reihe von Medikamentenpackungen befindet, bevor die Daten entsprechend den jeweiligen Patienten auf die Vorderseite der Medikamentenpackungen gedruckt werden, wobei dies vor dem Schätzen der aufzudruckenden Menge an Daten ausgeführt wird.

5. Verfahren zum Bedrucken von Verpackungsfolie für eine automatische Medikamenten-Verpackungsmaschine nach Anspruch 4, das des Weiteren umfasst, dass eine Warnmeldung über das in der ersten Packung verpackte Medikament gesucht wird und die Warnmeldung auf die erste Packung aufgedruckt wird (S01), wenn die Warnmeldung gesucht wird, wobei dies nach dem Bedrucken (S00) der ersten Packung ausgeführt wird.

6. Verfahren zum Bedrucken von Verpackungsfolie für eine automatische Medikamenten-Verpackungsmaschine nach Anspruch 1, das des Weiteren umfasst, dass die Informationen über die jeweiligen Patienten, die Anzahl von Medikamentenpackungen und Informationen über in die Packungen verpackten Medikamente auf ein letztes Paket aufgedruckt werden (S50), das sich an einem Ende einer Reihe von Medikamentenpackungen befindet, nachdem die Vorderseite der Medikamentenpackungen entsprechend den jeweiligen Patienten bedruckt worden ist, wobei dies nach dem Aufdrucken der Daten (S40) ausgeführt wird.

## Revendications

1. Procédé d'impression de feuille d'emballage destiné à une machine d'emballage de médicaments automatique comprenant :
l'évaluation d'une quantité de données à imprimer sur une face avant d'une feuille d'emballage d'un paquet de médicaments, dans lequel un médicament est emballé par dose, en fonction de patients respectifs (S10) ;
la comparaison de la quantité de données à imprimer évaluée à une quantité de données de référence pour déterminer si la quantité de données évaluée dépasse la quantité de données de référence ou non (S20) ;
la sélection d'un code-barres unidimensionnel comme procédé d'impression lorsque la quantité de données évaluée est inférieure ou égale à la quantité de données de référence, et d'un code-barres bidimensionnel comme procédé d'impression lorsque la quantité de données évaluée dépasse la quantité de données de référence (S30) ;
la sélection d'une taille et d'une position du code-barres à imprimer en fonction d'une taille prédéfinie du paquet de médicaments pour une dose (S31) ;
la sélection d'un élément de données à imprimer en plus sur la face avant du paquet de médicaments autre que le code-barres et l'attribution de taille et position de texte de données correspondant à l'élément sélectionné ; et
l'impression du code-barres sélectionné et de données d'impression prédéfinies sur la face avant de la feuille d'emballage du paquet de médicaments (S40).

2. Procédé d'impression de feuille d'emballage destiné à une machine d'emballage de médicaments automatique selon la revendication 1, comprenant en outre l'affichage virtuel du code-barres et de l'élément de données d'impression supplémentaire (S33), sélectionnés en fonction du patient, dans une zone paquet de médicaments d'un écran d'affichage de sorte que les tailles et positions du code-barres et de l'élément de données d'impression supplémentaire sélectionnés puissent être contrôlés à l'oeil nu, étape réalisée après la sélection de l'élément d'impression supplémentaire (S32).

3. Procédé d'impression de feuille d'emballage destiné à une machine d'emballage de médicaments automatique selon la revendication 2, comprenant en outre l'ajustement des tailles et positions du code-barres et de l'élément d'impression supplémentaire pour résoudre une erreur lorsque l'erreur se trouve dans le code-barres et l'élément d'impression supplémentaire affichés, étape réalisée après l'affichage virtuel du code-barres (S34).

4. Procédé d'impression de feuille d'emballage destiné à une machine d'emballage de médicaments automatique selon la revendication 1, comprenant en outre l'impression d'informations concernant les patients respectifs, le nombre de paquets de médicaments, et d'informations de médicaments emballés dans les paquets sur un paquet supérieur positionné sur un côté début d'une série de paquets de médicaments avant l'impression des données sur la face avant des paquets de médicaments en fonction des patients respectifs, étape réalisée avant l'évaluation de la quantité de données à imprimer (S00).

5. Procédé d'impression de feuille d'emballage destiné à une machine d'emballage de médicaments automatique selon la revendication 4, comprenant en outre la recherche d'un message d'avertissement concernant le médicament emballé dans le paquet supérieur, et l'impression du message d'avertissement (S01) sur le paquet supérieur lorsque le message d'avertissement est recherché, étape réalisée après l'impression du paquet supérieur (S00).

6. Procédé d'impression de feuille d'emballage destiné à une machine d'emballage de médicaments automatique selon la revendication 1, comprenant en outre l'impression des informations concernant les patients respectifs, le nombre des paquets de médicaments, et d'informations de médicaments emballés dans les paquets sur un paquet inférieur positionné sur un côté fin d'une série de paquets de médicaments (S50) après l'impression de la face avant des paquets de médicaments en fonction des patients respectifs, étape réalisée après l'impression des données (S40).
